Europäisches Patentamt

European Patent Office

Office européen des brevets

(11) Veröffentlichungsnummer : **0 432 098 A1**

(12) **EUROPÄISCHE PATENTANMELDUNG**

(21) Anmeldenummer : 90810928.3

(22) Anmeldetag : 28.11.90

(51) Int. Cl.⁵ : **B32B 27/08, B65D 65/40**

(30) Priorität : 04.12.89 CH 4335/89

(43) Veröffentlichungstag der Anmeldung :
**12.06.91 Patentblatt 91/24**

(84) Benannte Vertragsstaaten :
**AT BE CH DE FR GB IT LI NL SE**

(71) Anmelder : **BETAN AG**
**Untermühleweg 7**
**CH-6300 Zug (CH)**

(72) Erfinder : **Grämiger, Erich**
**Quellenstrasse 9**
**CH-3065 Bolligen (CH)**

(74) Vertreter : **Tschudi, Lorenz et al**
**Bovard AG Patentanwälte VSP**
**Optingenstrasse 16**
**CH-3000 Bern 25 (CH)**

(54) **Mehrschichtige Kunststoffolie.**

(57)    Die mehrschichtige Kunststoffolie umfasst eine Trägerfolie (2) aus Polystyrol. Auf der einen Seite der Trägerfolie (2) ist eine erste Schicht (4) aus einem etwa bei 80°C bis 110°C siegelbaren Material, vorzugsweise ein Ionomer, vorhanden. Die Ionomerschicht (4) ist mit der Trägerfolie (2) mit einem dazwischen angeordneten ersten Haftvermittler (3) verbunden. Auf der der Ionomerschicht (4) abgewandten Seite der Trägerfolie (2) ist eine zweite Schicht (6) aus Polyester mittels einem zweiten Haftvermittler (5) mit der Trägerfolie (2) verbunden. Die auf einer Koextrusionsanlage hergestellte und nachher bedruckte Folie eignet sich dazu, heute gebräuchliche, an Verpackungsbehältern mit Heissklebung angebrachte Bezeichnungsstreifen aus Papier oder Karton zu ersetzen. Die Verpackungen werden dadurch recyclierbar.

EP 0 432 098 A1

# MEHRSCHICHTIGE KUNSTSTOFFOLIE

Die vorliegende Erfindung bezieht sich auf eine mehrschichtige Kunststoffolie gemäss dem Oberbegriff des Patentanspruches 1, auf ein Verfahren zur Herstellung der Kunststoffolie und auf deren Verwendung gemäss dem Oberbegriff des Patentanspruches 9.

In der Verpackungsindustrie werden gegenwärtig grosse Anstrengungen unternommen, Verpackungsmaterial zu reduzieren und unschädlich vernichtbar oder mittels einem geeigneten Recycling-Verfahren wiederverwertbar zu machen.

Insbesondere in der Lebensmittelindustrie werden heute Verpackungsbehälter aus Kunststoff verwendet an deren äusseren Oberfläche bedruckte Bahnen oder Etiketten aus Papier oder Karton angebracht sind. Diese Bahnen oder Etiketten weisen nebst Werbung üblicherweise Angaben über die im Behälter verpackte Ware auf.

In der Massenproduktion, beispielsweise beim Bereitstellen von abgefüllten Joghurt-Behältern, geschieht dieses Anbringen der obgenannten Bahnen in rationeller Art und Weise vollautomatisch in sogenannten FFS-Anlagen. FFS steht dabei als Abkürzung der englischen Worte : "Form-Fill-Seal". Dadurch ist die Arbeitsweise der Anlage gekennzeichnet. In einem Arbeitsgang wird der Verpackungsbehälter durch Tiefziehen hergestellt, abgekühlt, mit der zu verpackenden Ware gefüllt und durch Versiegelung verschlossen.

Nach dem Formvorgang werden in den obgenannten Anlagen, vorzugsweise bei einer Temperatur von 80°C bis 100°C die bereits erwähnten Papieroder Kartonbahnen angebracht. Die äussere Oberfläche des auf diese Temperatur abgekühlten, soeben tiefgezogenen Verpackungsbehälters wird dabei in einem Zwischenschritt mit der Papier- oder Kartonbahn in Verbindung gebracht. Zum Erzielen eines unlösbaren Verbundes der letzteren mit der Oberfläche des Verpackungsbehälters ist die dem Behälter zugewandte Seite der Papier- oder Kartonbahn mit einem Heisskleber versehen, welcher eine Schmelztemperatur im vorgenannten Temperaturbereich aufweist.

Obschon sich die meisten thermoplastischen Kunststoffe für ein Recycling eignen, indem sie gesäubert, zerhackt und dem Granulat beispielsweise zum Herstellen von neuen Verpackungsbehältern beigemischt werden, sind gemäss dem vorgängig geschilderten Verfahren hergestellte Behälter wegen dem unlösbaren Verbund der Papieroder Kartonbahnen mit dem Kunststoff nicht wieder verwertbar.

Im weiteren weisen solche Verpackungsbehälter den zusätzlichen Nachteil auf, dass sich infolge der Feuchteempfindlichkeit des Papiers oder des Kartons oftmals Lagerhaltungsprobleme ergeben.

Es ist die Aufgabe der vorliegenden Erfindung den Stand der Technik mit einem Lösungsvorschlag in dem Sinne zu bereichern, dass die auf obgenannten FFS-Anlagen hergestellten Verpackungsbehälter weiterverwertbar sind, wobei gleichzeitig die geschilderten Lagerhaltungsprobleme behoben werden sollen.

Diese Aufgabe wird dadurch gelöst, dass anstelle der genannten Papier- oder Kartonbahnen eine mehrschichtige Folie mit den im kennzeichnenden Teil des Patentanspruches 1 aufgeführten Merkmalen eingesetzt wird. Die Folie wird nach dem im kennzeichnenden Teil des Patentanspruches 7 aufgeführten Verfahren hergestellt. Die Verwendung der Folie ist im Patentanspruch 9 gekennzeichnet.

Bei der Erfindung ging es darum, die genannten unlösbar mit dem Verpackungsbehälter verbundenen Papier- oder Kartonbahnen durch solche aus Kunststoff zu ersetzen. Nur bei ganz aus thermoplastischem Kunststoff bestehenden Behältern sind diese nach dem Gebrauch wieder verwertbar. Bekannte siegelbare Kunststoffolien, wie sie beispielsweise zum Verschliessen von obgenannten Behältern eingesetzt werden, sind ungeeignet, weil die Versiegelungstemperatur bei solchen Folien oft etwa 160°C beträgt. Die Verpackungsbehälter, die vorzugsweise aus Polystyrol hergestellt werden, würden sich bei solchen Temperaturen in einem plastischen Zustand befinden. Das Anbringen einer relativ grossflächig siegelbaren Folie wäre nicht möglich.

Es stellte sich daher das Problem eine Kunststoffolie zu finden, die auch noch bei Temperaturen von 80°C bis 100°C siegelbar ist, also in einem Temperaturbereich, in dem der Behälter bereits seinen festen Zustand erreicht hat.

Eine solche erfindungsgemässe Folie lässt sich auf einer Koextrusionsanlage realisieren indem die eine Seite einer Trägerfolie aus vorzugsweise Polystyrol mit einer Schicht aus einem Ionomer, einem Komonomer oder einem Ethylen-Vinyl-Acetat versehen wird. Für den geschilderten Verwendungszweck als besonders geeignet hat sich dabei das Ionomer erwiesen.

Insbesondere zum Bedrucken der Folie ist es im weiteren vorteilhaft, diese auf der auf der obgenannten Schicht abgewandten Seite mit einer Polyesterschicht zu versehen.

Die Polyesterschicht wird ebenfalls bei der Koextrusion der Folie angebracht. Zwischen den beiden Schichten und der Trägerfolie befindet sich je eine dünne Schicht eines Haftvermittlers.

Anhand von Figuren wird die Erfindung nachstehend beispielsweise näher beschrieben. Es zeigen

Fig. 1 einen Schnitt durch eine erfindungsgemässe Folie, und

Fig. 2 einen Schnitt durch einen teilweise dargestellten verschlossenen Behälter mit einer erfindungsgemässen Folie.

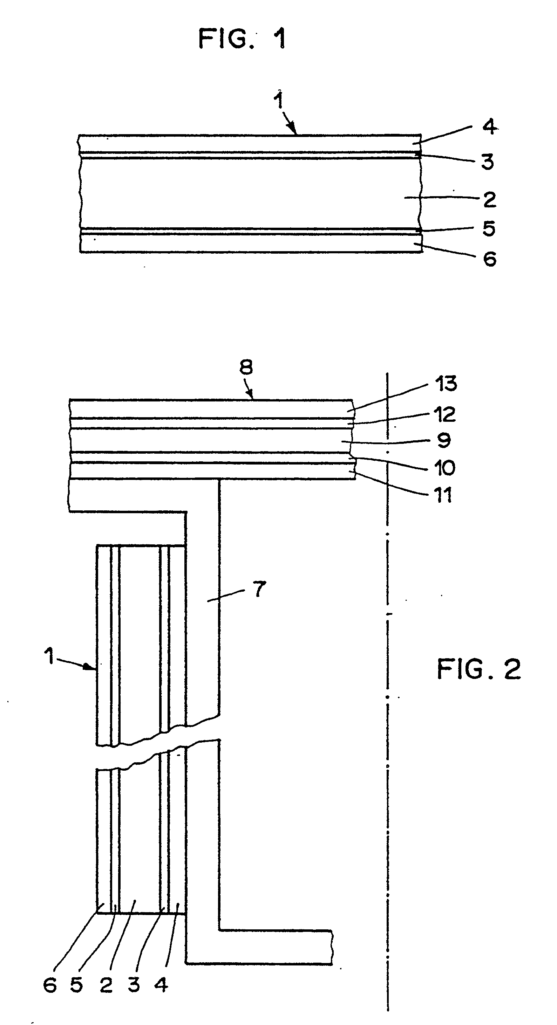

Eine bevorzugte Ausführungsform der erfindungsgemässen mehrschichtigen Kunststoffolie 1 ist
nachstehend anhand der Fig. 1 beschrieben. An einer
Trägerfolie 2, vorzugsweise aus Polystyrol, ist auf der
einen Seite eine erste Schicht 4 aus einem Material,
das bei relativ tiefen Temperaturen von etwa 70°C bis
110°C, vorzugsweise 80°C bis 100°C, noch siegelbar
ist, angebracht. Diese erste Schicht 4 ist mittels einem
ersten Haftvermittler 3, der sich zwischen der Trägerfolie 2 und der ersten Schicht 4 befindet, verbunden.

Das Polystyrol der Trägerfolie 2 kann ein Standardpolystyrol sein. Dieses ist transparent, hat jedoch
den Nachteil, dass es relativ brüchig und steif ist.
Inbezug auf die Verwendung der Folie ist ein mono-
oder biaxial orientiertes Standardpolystyrol vorzuziehen. Nach dem Extrudiervorgang wird dabei die sich
noch im plastischen Zustand befindliche Folie soweit
abgekühlt, bis ein elastischer Zustand erreicht wird.
Durch Dehnvorgänge in einer oder zwei Richtungen
wird die obgenannte mono- oder biaxiale Orientierung
erreicht. Die mechanischen Eigenschaften der transparenten Folie werden gegenüber einer nicht orientierten Polystyrolfolie verbessert. Die orientierte
Polystyrolfolie ist weniger spröd.

Durch Verwendung eines sogenannten High
Impact Polystyrol (HIPS), das ist ein Standardpolystyrol mit einem Zusatz von Butatien, kann der gleiche
Effekt erzielt werden. Ebenfalls ist es möglich, eine
gut brauchbare Trägerfolie 2 durch eine Abmischung
von Standardpolystyrol mit High Impact Polystyrol zu
erhalten.

Als erste Schicht 4 haben sich Ionomere, Komonomere oder Ethylen-Vinyl-Acetate als diejenigen
Materialien erwiesen, die bei den obgenannten relativ
niedrigen Temperaturen noch siegelbar sind. Bei der
Verwendung eines Komonomeres oder eines Ethylen-Vinyl-Acetates, zeigt jedoch die Folie nach der
Extrusion eine klebrige Oberfläche. Dies ist nicht der
Fall, wenn als erste Schicht 4 ein Ionomer, vorzugsweise SURLYN der Firma Du Pont de Nemours International S.A., CH-1211 Genève, verwendet wird.

Die Dicke der Trägerfolie beträgt in einer bevorzugten Ausführungsform etwa 100 bis 130 µm. Die
Dicke der SURLYN-Schicht 4 hingegen nur etwa 10
bis 15 µm. Die gleiche Schichtdicke weist etwa auch
der Haftvermittler 3, der nicht näher bezeichnet ist,
auf. Er dient nur zum Verbund der ersten Schicht 4 mit
der Trägerfolie 2.

Obschon die der ersten Schicht 4 abgewandte
Seite der Trägerfolie 2 aus Polystyrol relativ gut
bedruckbar ist, kann sie zur Verbesserung der
Bedruckbarkeit noch zusätzlich mit einer zweiten
Schicht 6, einer dünnen Schicht aus Polyester, versehen werden. Die zweite Schicht 6 ist mit einem zweiten ebenfalls nicht näher bezeichneten Haftvermittler
5 mit der Trägerfolie 2 verbunden. Die Schichtdicken
sowohl der zweiten Schicht 6 als auch des zweiten
Haftvermittlers 5 betragen ebenfalls je etwa 10 bis 15
µm.

Die mehrschichtige Kunststoffolie wird in einem
einzigen Arbeitsgang auf einer Koextrusionsanlage
nach einem bekannten Koextrusionsverfahren hergestellt. Mehrere auf eine gemeinsame Düse wirkende
Extruder sind für die Zuführung der verschiedenen als
Granulat in je einem den einzelnen Extrudern zugeordneten Lagerbehälter vorhandenen Materialien
besorgt. Nach dem Koextrudieren wird die auf einer
Rolle aufgerollte Folie auf der entsprechenden obgenannten Seite bedruckt und anschliessend in einzelne Bahnen getrennt.

Die Folienbahnen werden dann dazu benutzt, um
als einzelne Folienstücke in FFS-Anlagen mit äusseren Oberflächen von tiefgezogenen Verpackungsbehältern verbunden zu werden.

Ein solcher Behälter ist in der Fig. 2 im verschlossenen Zustand teilweise dargestellt. Er umfasst im
Prinzip den auf der FFS-Anlage tiefgezogenen Behälter 7, vorzugsweise aus Polystyrol, dann die erfindungsgemässe mehrschichtige Kunststoffolie 1, die
im gezeigten Ausführungsbeispiel mit der äusseren
Mantelfläche des Verpackungsbehälters 7 verbunden
ist sowie eine nach dem Füllen des Behälters ebenfalls in der FFS-Anlage durch Heissversiegelung
angebrachte Verschlussfolie 8. Solche Verschlussfolien sind bekannt und bestehen beispielsweise aus
einer zentralen Polystyrolschicht 9, auf deren dem
Verpackungsbehälter zugewandten Seite eine Heiss-
Siegelschicht 11 mit einem Haftvermittler 10 angebracht ist und deren dem Verpackungsbehälter
abgewandte Seite eine mit einem weiteren Haftvermittler 12 verbundene Polyesterschicht 13 aufweist.
Die Heiss-Siegelung, bei der nur eine kleine Zone des
oberen Randes des Verpackungsbehälters erwärmt
wird, kann bei ca. 160°C erfolgen. Eine flächendeckende Versiegelung, wie sie zum Anbringen der
erfindungsgemässen Folie 1 notwendig ist, wäre bei
diesen Temperaturen nicht möglich, weil sich der Verpackungsbehälter 7, wie eingangs bereits erwähnt,
bei solchen Temperaturen in einem plastischen
Zustand befinden würde.

Nur dank dem Umstand, dass es gelungen ist eine Kunststoffolie zu entwickeln, die noch bei Temperaturen von vorzugsweise 80°C bis 100°C siegelbar
ist, ist es möglich geworden, die in bestehenden FFS-
Anlagen bis jetzt gebräuchlichen Bezeichnungsstreifen oder Etiketten aus Papier oder Karton zu
ersetzen. Die voll aus thermoplastischen Kunststoffen zur Hauptsache aus Polystyrol bestehende Verpackung 1, 7, 8 kann mittels einem geeigneten
Recycling-Verfahren wieder verwertet werden.

**Ansprüche**

1. Mehrschichtige Kunststoffolie mit wenigstens einer Trägerfolie, dadurch gekennzeichnet, dass auf der einen Seite der Trägerfolie (2) eine erste Schicht (4) aus einem zwischen 70° und 110° siegelbaren Material vorhanden ist, und dass die erste Schicht (4) mit der Trägerfolie (2) mit einem dazwischen angeordneten ersten Haftvermittler (3) verbunden ist.

2. Kunststoffolie nach Anspruch 1, dadurch gekennzeichnet, dass die Trägerfolie (2) aus Polystyrol besteht.

3. Kunststoffolie nach Anspruch 2, dadurch gekennzeichnet, dass das Polystyrol ein Standardpolystyrol oder ein High Impact Polystyrol (HIPS) oder eine Abmischung davon ist.

4. Kunststoffolie nach Anspruch 2, dadurch gekennzeichnet, dass das Polystyrol mono- oder biaxial orientiert ist.

5. Kunststoffolie nach einem der Ansprüche 1 bis 4, dadurch gekennzeichnet, dass die erste Schicht (4) aus einem Ionomer, Komonomer oder aus einem Ethylen-Vinyl-Acetat besteht.

6. Kunststoffolie nach einem der Ansprüche 1 bis 5, dadurch gekennzeichnet, dass auf der der ersten Schicht (4) gegenüberliegenden Seite der Trägerfolie (2) eine zweite Schicht (6) aus Polyester angeordnet ist, und dass die Polyesterschicht (6) mit der Trägerschicht (2) durch einen dazwischen angeordneten zweiten Haftvermittler (5) verbunden ist.

7. Verfahren zur Herstellung der mehrschichtigen Kunststoffolie (1) nach einem der Ansprüche 1 bis 6, dadurch gekennzeichnet, dass die Trägerfolie (2) und wenigstens die erste Schicht (4) sowie wenigstens der erste Haftvermittler (3) auf einer Koextrusionsanlage in einem Arbeitsgang miteinander verbunden werden.

8. Verfahren nach Anspruch 7, dadurch gekennzeichnet, dass die Kunststoffolie (1) auf der der ersten Schicht (4) abgewandten Seite bedruckt und anschliessend in Bahnen getrennt wird.

9. Verwendung der mehrschichtigen Kunststoffolie nach einem der Ansprüche 1 bis 6 zum Anbringen an einem in einer Tiefzieh- oder Form-Fill-Seal-Anlage (FFS-Anlage) hergestellten Behälter (7), dadurch gekennzeichnet, dass das Anbringen in der Tiefzieh- oder Form-Fill-Seal-Anlage unmittelbar nach dem Tiefzieh- oder Formvorgang des Behälters, bei einer Temperatur von 70°C bis 110°C erfolgt, wobei die auf der Trägerfolie (2) vorhandene erste Schicht (4) als Siegelschicht oder Haftvermittler dient.

## FIG. 1

## FIG. 2

Europäisches
Patentamt

## EUROPÄISCHER RECHERCHENBERICHT

Nummer der Anmeldung

EP 90 81 0928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-265544 (W.R. GRACE & CO.) <br> * Seite 3, Zeile 8 - Seite 3, Zeile 20; Ansprüche 1, 3, 5, 8 * | 1-3 | B32B27/08 <br> B65D65/40 |
| A | | 5 | |
| Y | DE-A-2729908 (CHAMPION INT. CORP., GULF OIL CORP.) <br> * Ansprüche 1, 5, 6, 8, 16 * | 1-3 | |
| A | | 7 | |
| A | US-A-4746574 (HATTORI ET AL.) <br> * Spalte 2, Zeile 64 - Spalte 3, Zeile 50 * <br> * Spalte 6, Zeile 60 - Spalte 7, Zeile 12; Ansprüche 3, 4, 13, 14; Figuren 2, 3 * | 1-6, 9 | |
| A | US-A-4521467 (K.R. BERGER) <br> * Spalte 2, Zeile 65 - Spalte 3, Zeile 36; Ansprüche 1-6, 8, 9, 13 * | 1-3, 5, 6, 8 | |
| | | | **RECHERCHIERTE SACHGEBIETE (Int. Cl.5)** <br><br> B32B |

Der vorliegende Recherchenbericht wurde für alle Patentansprüche erstellt

| Recherchenort | Abschlußdatum der Recherche | Prüfer |
|---|---|---|
| DEN HAAG | 04 MAERZ 1991 | DERZ T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................
& : Mitglied der gleichen Patentfamilie, übereinstimmendes Dokument

EPO FORM 1503 03.82 (P0403)